# EUROPEAN PATENT SPECIFICATION

(11) **EP 2 530 915 B1**
(45) Date of publication and mention of the grant of the patent: **19.09.2018**
(21) Application number: 11768455.5
(22) Date of filing: 04.05.2011
(51) Int. Cl.: H04M 1/67, G05D 25/02

(54) **METHOD FOR LOCKING MOBILE TELEPHONE KEYBOARD AND MOBILE TELEPHONE**
VERFAHREN ZUM SPERREN DER TASTATUR EINES MOBILTELEFONS UND MOBILTELEFON
PROCÉDÉ DE VERROUILLAGE DE CLAVIER DE TÉLÉPHONE MOBILE ET TÉLÉPHONE MOBILE ASSOCIÉ

(43) Date of publication of application: 05.12.2012
(73) Proprietor: Huawei Device (Dongguan) Co., Ltd., Dongguan, Guangdong, PRC, 523808 (CN)
(72) Inventor: WANG, Quanxin, Guangdong 518129 (CN)
(74) Representative: Pfenning, Meinig & Partner mbB
(86) International application number: PCT/CN2011/073641
(87) International publication number: WO 2011/127844

(56) References cited:
- EP-A1- 1 968 287
- WO-A1-2009/001031
- CN-A- 1 405 728
- CN-A- 1 917 683
- CN-A- 1 980 273
- CN-A- 101 937 307
- US-A1- 2007 161 410

## Description

### FIELD OF THE INVENTION

The present invention relates to the field of mobile communications, and in particular, to a method for locking a mobile phone keyboard and a mobile phone.

### BACKGROUND OF THE INVENTION

In the daily work and life, a user often puts a mobile phone in a pocket. In order to avoid unnecessary troubles or even economic losses caused by accidentally touching keys of the mobile phone, the user may lock the mobile phone keyboard to avoid an accidental dialing event.

The manner for locking a mobile phone keyboard usually includes a manual locking manner or an automatic locking manner. The manual locking manner is to lock the mobile phone keyboard by pressing a key of the keyboard for a long time, and the automatic locking manner may include: a timed automatic locking manner, in which when standing time in a state where the mobile phone is not operated reaches preset locking time, the mobile phone keyboard is automatically locked; a triggered automatic locking manner, in which for example, the mobile phone keyboard of a slider mobile phone is locked by closing the slider; and a light sensing locking manner, in which light intensity in the ambient environment is measured by a light sensor of the mobile phone, and when light intensity is smaller than a certain threshold, the mobile phone keyboard is locked.

In the above prior art, a common problem in locking the mobile phone keyboard with the manual locking manner is that a mobile phone user easily forgets to lock the mobile phone keyboard; a common problem in locking the mobile phone keyboard with the timed automatic locking manner is that the preset locking time is hard to be set suitably, when the preset locking time is too short, the mobile phone is often locked during the use of the mobile phone which makes the user frequently perform unlocking, and when the preset locking time is too long, an accidental operation happens when the mobile phone is not locked in time after being put into the pocket; a common problem in locking the mobile phone keyboard with the triggered automatic locking manner is that when the user does not put the mobile phone into the pocket and needs to use the mobile phone again after locking the keyboard, it is inconvenient for the user to use the mobile phone because the mobile phone has received a trigger and locked the keyboard; and a common problem in locking the mobile phone keyboard with the light sensing locking manner is that judging whether to lock the mobile phone keyboard by only measuring light intensity in the ambient environment causes the mobile phone keyboard to be in a locked state all the time at night because of the low light intensity measured by the mobile phone, which affects the use by the user. Based on the above, in the prior art, the manners for locking a mobile phone keyboard all make the user forget to lock the keyboard before putting the mobile phone into the pocket or lock the mobile phone keyboard during the use of the mobile phone, and as a result, the mobile phone keyboard is not locked in time or the normal use of the mobile phone by the user is affected, EP 1968287 A1 discloses a mobile telephone comprising a user interface with a key for controlling a functionality of the device, and a capacitive sensor for enabling the control of the functionality via the key dependent on a change of a capacitance sensed due to a change in proximity of a user. And light sensors can be used as well.

US 2007/161410 A1 discloses a method and a mobile phone capable of controlling a keyboard lock thereof. An optical sensor and a software are installed to the mobile phone, and the software controls the locking and unlocking of the keyboard according to a light source detected by the optical sensor, such that the keyboard of the mobile phone will be locked automatically,

CN 101937307 A discloses a method for automatically locking a mobile phone keypad or a touch screen by utilizing a photosensitive device, comprising the following steps of: firstly, installing the photosensitive device, and detecting the intensity of the light of the surrounding environment, and then judging whether the surrounding environment is a dark environment or not through a software arithmetic to decide whether the keypad or the touch pad is locked or not. By implementing the invention, a mode of locking the keypad or the touch screen can be added when a user uses a mobile phone, the probability of the mobile phone misoperation can also be effectively reduced and the experience of the user is promoted.

WO 2009/001031 A1 discloses a mobile phone with a first and a second optical sensor as environmental sensors that are disposed on opposite sides of the mobile phone. Locking a keyboard of the mobile phone may be favoured if both optical sensors, but not if only a single optical sensor, senses a relatively low level of ambient light.

### SUMMARY OF THE INVENTION

Embodiments of the present invention provide a method for locking a mobile phone keyboard and a mobile phone, which can ensure that the mobile phone keyboard is not locked before a mobile phone is put into a pocket and the mobile phone keyboard is automatically locked after the mobile phone is put into the pocket, so as to ensure that a user can lock the mobile phone keyboard in time without affecting normal use of the mobile phone,

A method for locking a mobile phone keyboard provided by an embodiment of the present invention includes: receiving a key event reported by each light sensing key when the light sensing key is blocked by a light-impenetrable object; and judging whether the light sensing keys are all pressed when the key event is received; if yes, locking the mobile phone keyboard; if not, not locking the mobile phone keyboard; wherein at least one light sensing key is disposed on each of the front face and the back face of the mobile phone.

A mobile phone provided by an embodiment of the present invention includes: mobile phone light sensing keys, each of which is configured to report a key event when being blocked from light; a receiving unit, configured to receive the key event reported by each light sensing key; a judgment unit, configured to judge whether the light sensing keys are all pressed when the key event is received; and a locking unit, configured to lock a mobile phone keyboard if the light sensing keys are all pressed and to not lock the mobile phone keyboard if the light sensing keys are not all pressed; wherein at least one light sensing key is disposed on each of the front face and the back face of the mobile phone.

It can be seen from the above technical solutions that the embodiments of the present invention have the following advantages. Light sensing keys are disposed on front and back faces of a mobile phone. After a key event reported by each light sensing key is received, it is judged whether the light sensing keys are all pressed. If the keys are all pressed, the mobile phone keyboard is locked. Because only when the mobile phone is put in a pocket, can a case occurs in which the light sensing keys are all pressed because of being blocked; at this time, locking the mobile phone keyboard can ensure that the mobile phone keyboard is locked automatically after the mobile phone is put into the pocket and ensure that a user can lock the mobile phone keyboard in time to avoid an accidental operation.

### BRIEF DESCRIPTION OF THE DRAWINGS

FIG. 1 is a schematic diagram of an embodiment of a method for locking a mobile phone keyboard according to an embodiment of the present invention;
FIG. 2 is a schematic location diagram of a light sensing key on a front face of a mobile phone according to an embodiment of the present invention;
FIG. 3 is a schematic location diagram of a light sensing key on a back face of a mobile phone according to an embodiment of the present invention;
FIG. 4 is a schematic diagram of another embodiment of a method for locking a mobile phone keyboard according to an embodiment of the present invention;
FIG. 5 is a schematic diagram of an embodiment of a mobile phone according to an embodiment of the present invention; and
FIG. 6 is a schematic structural diagram of a mobile phone circuit.

### DETAILED DESCRIPTION OF THE EMBODIMENTS

Embodiments of the present invention provide a method for locking a mobile phone keyboard and a mobile phone, so as to ensure that the mobile phone keyboard is not locked before the mobile phone is put into a pocket, and the mobile phone keyboard is locked automatically after the mobile phone is put into the pocket, and ensure that a user can lock the mobile phone keyboard in time without affecting normal use of the mobile phone, and at the same time, the keyboard is not accidentally locked before the mobile phone is put into the pocket, without affecting the normal use of the mobile phone.

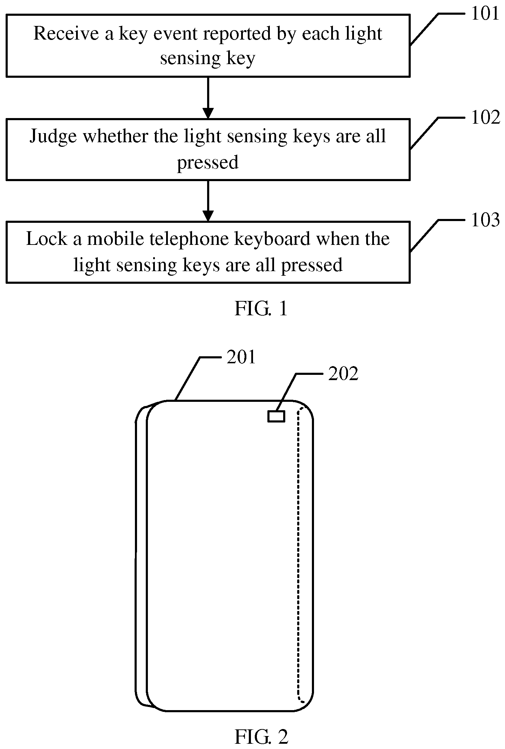

Referring to FIG. 1, a method for locking a mobile phone keyboard according to an embodiment of the present invention includes:
101: Receive a key event reported by each light sensing key.

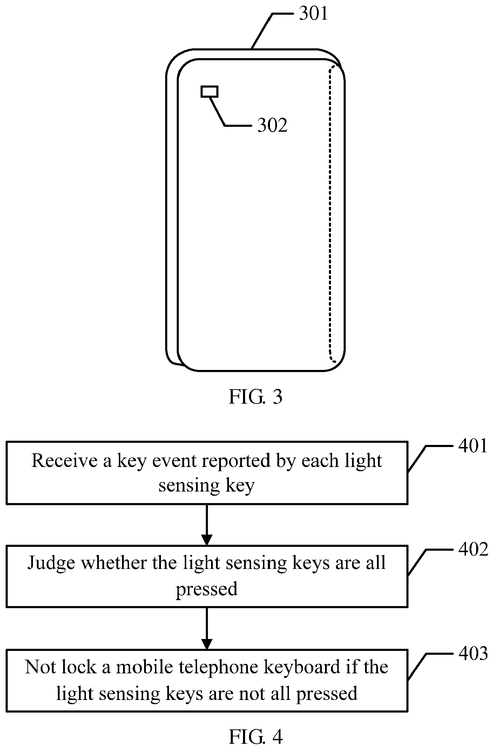

In the embodiment of the present invention, at least one light sensing key is disposed on each of the front face and the back face of a mobile phone, the location of each light sensing key is not specifically limited, and any location which is not easy to be blocked by the hand of a user may be selected. For example, a light sensing key is disposed at an upper right corner of the front face of the mobile phone and a light sensing key is disposed at an upper left corner of the back face of the mobile phone. Referring to FIG. 2 and FIG. 3 for details, FIG. 2 is a schematic diagram of the front face of the mobile phone, and a light sensing key 202 is located at the upper right corner of the front face of a mobile phone body 201; and FIG. 3 is a schematic diagram of the back face of the mobile phone, and a light sensing key 302 is located at the upper left corner of the back face of a mobile phone body 301.

It should be noted that the light sensing key applies the principle of measuring light reflection, and when the light sensing key is blocked by a light-impenetrable object, a key message may be reported to a system. The specific working principle is a well-known technology, which is not repeated herein.

102. Judge whether the light sensing keys are all pressed.

It is judged whether the light sensing keys are all pressed. If the keys are all pressed, it is indicated that the light sensing keys are all blocked by a light-impenetrable object. For example, when the mobile phone is put into a clothing pocket, a light sensing key on one side close to a human body is pressed first because of being blocked by the body; and when the mobile phone is completely put in the clothing pocket, a light sensing key on the other side are also pressed because of being blocked by the pocket. It can be understood that in a particular scenario, the light sensing keys may be pressed at the same time, for example, when the mobile phone is put into a handbag, the light sensing keys are pressed at the same time because the light sensing keys are blocked by two sides of the handbag at the same time; and when the light sensing keys are all pressed, the mobile phone is required to be locked.

103. Lock the mobile phone keyboard when the light sensing keys are all pressed.

If the light sensing keys are all pressed, the mobile phone keyboard is locked.

It should be noted that the specific locking manner for locking a mobile phone keyboard can be implemented by the prior art. For example, locking may be performed by keyboard locking software pre-disposed in the mobile phone. It can be understood that the above is only one manner for locking a mobile phone keyboard, and other locking manners may be used, which are not limited herein specifically.

In the embodiment of the present invention, the light sensing keys are disposed on the front and back faces of the mobile phone. When the light sensing keys are blocked by a light-impenetrable object, the key events are reported; and when the key events are received, and it is judged whether the light sensing keys are all pressed. If the light sensing keys are all pressed, the mobile phone keyboard is locked. Because only when the mobile phone is put in the pocket, can a case occurs in which the light sensing keys are all pressed because of being blocked, at this time, locking the mobile phone keyboard can ensure that the mobile phone keyboard is not locked before the mobile phone is put into the pocket, and the mobile phone keyboard is locked automatically after the mobile phone is put into the pocket, and ensure that the user can lock the mobile phone keyboard in time to avoid a problem that mobile phone keys are operated accidentally when the mobile phone keyboard is not locked in time after the mobile phone is put into the pocket, and meanwhile ensure that the keyboard is not accidentally locked before the mobile phone is put into the pocket, without affecting the normal use of the mobile phone.

For ease of understanding, the method for locking a mobile phone keyboard according to the embodiment of the present invention is described below through another embodiment. Referring to FIG. 4, the method for locking a mobile phone keyboard according to the embodiment of the present invention includes:
401. Receive a key event reported by each light sensing key.

For specific content of this step, reference can be made to the content described in step 101 according to the embodiment shown in FIG. 1, which is not repeated herein.

402. Judge whether the light sensing keys are all pressed.

It is judged whether the light sensing keys are all pressed. If the light sensing keys are not all pressed, it is indicated that the light sensing keys are not completely blocked by a light-impenetrable object. Accordingly, it can be judged that the mobile phone is not put in the pocket completely, for example, the mobile phone may be held in hand by a mobile phone user, and then step 403 is executed.

403. If the light sensing keys are not all pressed, the mobile phone keyboard is not locked.

If the light sensing keys are not all pressed, it is indicated that the light sensing keys are not all blocked by the light-impenetrable object. At this time, the mobile phone may not be put in the pocket. In order to prevent the mobile phone in use from locking the keyboard by mistake, the mobile phone keyboard is not locked.

In the embodiment of the present invention, the light sensing keys are disposed on the font and back faces of the mobile phone. When a light sensing key is blocked by a light-impenetrable object, a key event is reported; when the key event is received, and it is judged whether the light sensing keys are all pressed. If the keys are not all pressed, it is indicated that the light sensing keys are not all blocked by the light-impenetrable object and it can be judged that the mobile phone may not be put in the pocket, and the mobile phone keyboard is not locked, so as to ensure that the user can use the mobile phone normally, and the keyboard is not accidentally locked before the mobile phone is put into the pocket, without affecting the normal use of the mobile phone.

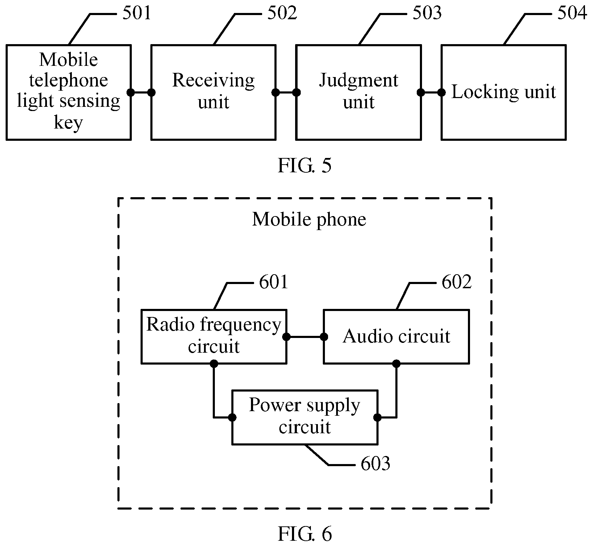

The following describes a mobile phone according to an embodiment of the present invention. Referring to FIG. 5, a mobile phone according to the embodiment of the present invention includes:
mobile phone light sensing keys 501, each of which is configured to report a key time when being blocked from light;
a receiving unit 502, configured to receive a key event reported by each light sensing key;
a judgment unit 503, configured to judge whether the light sensing keys are all pressed; and
a locking unit 504, configured to lock a mobile phone keyboard.

In the embodiment of the present invention, the light sensing keys 501 are disposed on front and back faces of the mobile phone, when ambient light of the light sensing keys 501 is blocked, key events are reported; the sensitivity of light sensing of the light sensing keys 501 depends on inherent properties of the light sensing keys. Application may be performed according to requirements in practice, and which kind of light sensing key is specifically applied is not specifically limited herein.

The receiving unit 502 receives the key events, and the judgment unit 503 judges whether the light sensing keys are all pressed; if the light sensing keys are all pressed, the locking unit 504 locks the mobile phone keyboard; and if the light sensing keys are not all pressed, the mobile phone keyboard is not locked. Because only when the mobile phone is put in the pocket, can a case occurs in which the light sensing keys are all pressed because of being blocked; at this time, locking the mobile phone keyboard can ensure that the mobile phone keyboard is not locked before the mobile phone is put into the pocket, and the mobile phone keyboard is locked automatically after the mobile phone is put into the pocket, and ensure that the user can lock the mobile phone keyboard in time to avoid a problem that mobile phone keys are operated accidentally when the mobile phone keyboard is not locked in time after the mobile phone is put into the pocket, and meanwhile ensure that the keyboard is not accidentally locked before the mobile phone is put into the pocket, without affecting the normal use of the mobile phone.

The mobile phone further includes: a radio frequency circuit, an audio circuit and a power supply circuit, so as to achieve basic functions of a mobile phone. The following introduces the radio frequency circuit, the audio circuit and the power supply circuit. Referring to FIG. 6:
a radio frequency circuit 601 is mainly configured to set up communication between the mobile phone and a wireless network and implement the receiving and sending of data between the mobile phone and the wireless network;
an audio circuit 602 is mainly configured to capture sound and convert the captured sound into sound data, so that the mobile phone sends the sound data to the wireless network through the radio frequency circuit; or restore sound from sound data received by the mobile phone from the wireless network through the radio frequency circuit and play the sound data to a user, or the audio circuit has the functions of capturing and sending sound data, and receiving and playing sound data at the same time; and
a power supply circuit 603 is mainly configured to supply power to each circuit or each component of the mobile phone to ensure the normal work of the mobile phone.

Persons of ordinary skill in the art may understand that all or part of the steps of the method according to the embodiments of the present invention may be implemented by a program instructing relevant hardware. The program may be stored in a computer readable storage medium, and the above mentioned storage medium may be such as a read-only memory, a magnetic disk or an optical disk.

The above introduces a method for locking a mobile phone keyboard and a mobile phone provided by the present invention in detail. Persons of ordinary skill in the art can make modifications to the specific implementation and application range on the basis of the idea of the embodiments of the present invention. Based on the above, the content of the specification should not be understood as a limit to the present invention.

## Claims

1. A method for locking a mobile phone keyboard, wherein at least one light sensing key (202, 302, 501) is disposed on each of the front face and the back face of the mobile phone, comprising:
receiving (101, 401) a key event reported by each light sensing key (202, 302), when the light sensing key is blocked by a light-impenetrable object,
judging (102, 402) whether the light sensing keys (202, 302) are all pressed when the key event is received; and
if the light sensing keys arc all pressed, locking (103) the mobile phone keyboard;
if the light sensing keys are not all pressed, not locking (403) the mobile phone keyboard.

2. A mobile phone, comprising:
mobile phone light sensing keys (202, 302, 501), each of which is configured to report a key event when being blocked from light;a receiving unit (502), configured to receive the key event reported by each light sensing key (202, 302, 501);a judgment unit (503), configured to judge whether the light sensing keys (202, 302, 501) are all pressed when the key event is received; and
a locking unit (504), configured to lock a mobile phone keyboardif the light sensing keys (202, 302, 501) are all pressed and to not lock the mobile phone keyboard if the light sensing keys (202, 302, 501) are not all pressed;
wherein at least one light sensing key (202, 302, 501) is disposed on each of the front face and the back face of the mobile phone.

3. The mobile phone according to claim 2, wherein the mobile phone further comprises:
a radio frequency circuit (601), a microphone (602), a loudspeaker (602) and a power supply circuit (603); wherein
the radio frequency circuit (601) is configured to set up communication between the mobile phone and a wireless network and implement receiving and sending of data between the mobile phone and the wireless network;
the microphone (602) is configured to capture sound and convert the captured sound into sound data, so that the mobile phone sends the sound data to the wireless network through the radio frequency circuit;
the loudspeaker (602)is configured to restore sound from sound data received by the mobile phone from the wireless network through the radio frequency circuit and play the sound to a user; and
the power supply (603) circuit is configured to supply power to each circuit or each component of the mobile phone.

## Patentansprüche

1. Verfahren zum Sperren der Tastatur eines Mobiltelefons, wobei mindestens eine Licht wahrnehmende Taste (202, 302, 501) auf jeder von der Vorderseite und der Rückseite des Mobiltelefons angeordnet ist, umfassend:
Empfangen (101, 401) eines Tastenereignisses, das von jeder Licht wahrnehmenden Taste (202, 302) berichtet wird, wenn die Licht wahrnehmende Taste durch ein lichtundurchlässiges Objekt blockiert wird,
Beurteilen (102, 402), ob die Licht wahrnehmenden Tasten (202, 302) alle gedrückt sind, wenn das Tastenereignis empfangen wird; und
wenn die Licht wahrnehmenden Tasten alle gedrückt sind, Sperren (103) der Tastatur des Mobiltelefons;
wenn die Licht wahrnehmenden Tasten nicht alle gedrückt sind, kein Sperren (403) der Tastatur des Mobiltelefons;

2. Mobiltelefon, umfassend:
Licht wahrnehmende Tasten (202, 302, 501) des Mobiltelefons, von denen jede so konfiguriert ist, dass sie ein Tastenereignis berichtet, wenn sie von Licht blockiert wird; eine Empfangseinheit (502), die zum Empfangen des Tastenereignisses konfiguriert ist, das von jeder Licht wahrnehmenden Taste (202, 302, 501) berichtet wird; eine Beurteilungseinheit (503), die konfiguriert ist, um zu beurteilen, ob die Licht wahrnehmenden Tasten (202, 302, 501) alle gedrückt sind, wenn das Tastenereignis empfangen wird; und
eine Sperreinheit (504), die konfiguriert ist, um eine Tastatur eines Mobiltelefons zu sperren, falls die Licht wahrnehmenden Tasten (202, 302, 501) alle gedrückt sind, und die Tastatur des Mobiltelefons nicht zu sperren, falls die Licht wahrnehmenden Tasten (202, 302, 501) nicht alle gedrückt sind;
wobei mindestens eine Licht wahrnehmende Taste (202, 302, 501) auf jeder von der Vorderseite und der Rückseite des Mobiltelefons angeordnet ist.

3. Mobiltelefon nach Anspruch 2, wobei das Mobiltelefon ferner umfasst:
eine Hochfrequenzschaltung (601), ein Mikrophon (602), einen Lautsprecher (602) und eine Stromversorgungsschaltung (603); wobei
die Hochfrequenzschaltung (601) konfiguriert ist, um Kommunikation zwischen dem Mobiltelefon und einem Drahtlosnetzwerk einzurichten und Empfangen und Senden von Daten zwischen dem Mobiltelefon und dem Drahtlosnetzwerk zu implementieren;
das Mikrophon (602) konfiguriert ist, um Klang zu erfassen und den erfassten Klang in Klangdaten umzuwandeln, so dass das Mobiltelefon die Klangdaten über die Hochfrequenzschaltung an das Drahtlosnetzwerk sendet;
der Lautsprecher (602) konfiguriert ist, um Klang aus Klangdaten wieder herzustellen, die durch das Mobiltelefon aus dem Drahtlosnetzwerk über die Hochfrequenzschaltung empfangen wurden, und den Klang an einen Benutzer abzuspielen; und
die Stromversorgungsschaltung (603) konfiguriert ist, um jede Schaltung oder jede Komponente des Mobiltelefons mit Strom zu versorgen.

## Revendications

1. Procédé pour verrouiller un clavier de téléphone mobile, dans lequel au moins une touche de détection de lumière (202, 302, 501) est disposée à la fois sur la face avant et sur la face arrière du téléphone mobile, comprenant les étapes consistant à :
recevoir (101, 401) un événement de touche rapporté par chaque touche de détection de lumière (202, 302) lorsque la touche de détection de lumière est bloquée par un objet dans lequel la lumière ne peut pénétrer,
déterminer (102, 402) si toutes les touches de détection de lumière (202, 302) sont actionnées lorsque l'événement de touche est reçu ; et
si toutes les touches de détection de lumière sont actionnées, verrouiller (103) le clavier de téléphone mobile ;
si les touches de détection de lumière ne sont pas toutes actionnées, ne pas verrouiller (403) le clavier de téléphone mobile.

2. Téléphone mobile, comprenant :
des touches de détection de lumière de téléphone mobile (202, 302, 501), chacune d'elles étant configurée pour rapporter un événement de touche lorsque la lumière ne l'atteint pas ; une unité de réception (502), configurée pour recevoir l'événement de touche rapporté par chaque touche de détection de lumière (202, 302, 501) ; une unité de détermination (503), configurée pour déterminer si toutes les touches de détection de lumière (202, 302, 501) sont actionnées lorsque l'événement de touche est reçu ; et
une unité de verrouillage (504), configurée pour verrouiller un clavier de téléphone mobile si toutes les touches de détection de lumière (202, 302, 501) sont actionnées et pour ne pas verrouiller le clavier de téléphone mobile si les touches de détection de lumière (202, 302, 501) ne sont pas toutes actionnées ;
au moins une touche de détection de lumière (202, 302, 501) étant disposée à la fois sur la face avant et sur la face arrière du téléphone mobile.

3. Téléphone mobile selon la revendication 2, le téléphone mobile comprenant également :
un circuit de radiofréquence (601), un microphone (602), un haut-parleur (602) et un circuit d'alimentation électrique (603) ;
le circuit de radiofréquence (601) étant configuré pour établir une communication entre le téléphone mobile et un réseau sans fil et mettre en oeuvre la réception et l'envoi de données entre le téléphone mobile et un réseau sans fil ;
le microphone (602) étant configuré pour capturer des sons et convertir les sons capturés en données sonores, afin que le téléphone mobile envoie les données sonores au réseau sans fil par l'intermédiaire du circuit de radiofréquence ;
le haut-parleur (602) étant configuré pour reproduire le son à partir des données sonores reçues par le téléphone mobile par l'intermédiaire du circuit de radiofréquence et lire le son pour un utilisateur ; et
le circuit d'alimentation électrique (603) étant configuré pour fournir une alimentation électrique à chaque circuit ou chaque composant du téléphone mobile.
